# FASCICULE DE BREVET EUROPEEN

(11) **EP 1 809 092 B1**
(45) Date de publication et mention de la délivrance du brevet: **17.08.2011**
(21) Numéro de dépôt: 05792005.0
(22) Date de dépôt: 11.10.2005
(51) Int. Cl.: A01G 3/08, A01M 21/04

(54) **LIMITEUR DE CROISSANCE DE PLANTES GRIMPANTES**
WACHSTUMBEGRENZUNGSMITTEL FÜR KLETTERPFLANZEN
GROWTH LIMITER FOR CLIMBING PLANTS

(30) Priorité: 13.10.2004 BE 200400501
(43) Date de publication de la demande: 25.07.2007
(73) Titulaire: Gesché, Luc, 1480 Tubize (BE)
(72) Inventeur: Gesché, Luc, 1480 Tubize (BE)
(74) Mandataire: Pecher, Nicolas
(86) Numéro de dépôt international: PCT/EP2005/055170
(87) Numéro de publication internationale: WO 2006/040326

(56) Documents cités:
- DE-A1- 3 016 145
- DE-A1- 3 835 670
- DE-A1- 19 539 110
- FR-A- 2 659 190
- US-A- 2 607 165
- MIZUNO A ET AL: "Destruction of weeds by pulsed high voltage discharges" CONFERENCE RECORD OF THE INDUSTRY APPLICATIONS SOCIETY ANNUAL MEETING. SEATTLE, OCT. 7 - 12, 1990, NEW YORK, IEEE, US, vol. VOL. 2 MEETING 25, 7 octobre 1990 (1990-10-07), pages 720-727, XP010034917 ISBN: 0-87942-553-9

## Description

### Objet de l'invention

La présente invention a pour objet un dispositif et un procédé pour limiter la croissance de plantes grimpantes telles que la vigne vierge ou d'autres plantes s'accrochant sur une surface. L'invention a une application particulière non exclusive dans le secteur de l'horticulture.

### Arrière-plan technologique

Des bâtiments à usage privé, voire industriel, sont souvent recouverts de plantes grimpantes pour l'effet esthétique qu'elles procurent ainsi que pour le camouflage de bâtiments ne présentant pas d'intérêt architectural particulier. Pour le recouvrement rapide sur tout type de surface desdits bâtiments, on utilise principalement la vigne vierge (Parthenocissus ou Ampelopsis). Ces recouvrements végétaux n'ont pratiquement que des avantages mais possèdent malheureusement un inconvénient: leur caractère envahissant et, de ce fait, la nécessité de leur taille très fréquente. Ils atteignent très rapidement les corniches, gouttières, tuiles, fenêtres etc., où ils peuvent provoquer des détériorations, ce qui fait renoncer plus d'un à leur plantation.

### État de la technique

Pour limiter la croissance des plantes grimpantes, il est de pratique connue de couper les pousses manuellement, au moyen de sécateurs, cisailles, ciseaux. Comme on désire le plus souvent que le feuillage recouvre un mur jusqu'à sa partie supérieure, mais qu'on désire préserver la toiture et la gouttière de végétation, il est nécessaire d'utiliser des échelles ou échafaudages. Il va sans dire que l'utilisation d'échelles ou d'échafaudages présente des dangers et que la méthode est lente et très coûteuse.

Le document FR 2 698 521 A décrit un dispositif permettant de contrôler la croissance de plantes grimpantes sur une façade, formé d'une corniche comportant une rainure servant de guide à un organe de coupe.

La publication de Mizuno et al. (Abstract « Destruction of weeds by pulsed high voltage discharges », Industry Applications Society Annual Meeting, 1990., Conference Record of the 1990 IEEE 7-12 Oct 1990 Pages 720-727) décrit un instrument manuel destiné à appliquer des décharges électriques sur le sol pour la destruction de la mauvaise herbe. On connaît également par DE-A-3835670 et DE-A-19539110 des dispositifs protégeant un espace défini sur le sol contre la présence d'escargots. Ces dispositifs ne sont pas adaptés à la limitation de la croissance de plantes grimpantes sur une surface.

### Buts de l'invention

La présente invention vise à fournir un dispositif et un procédé de limitation de croissance de plantes grimpantes qui soit aisé et économique d'emploi et d'installation, sûr, et qui ne présente pas les inconvénients de l'art antérieur.

### Résumé de l'invention

La présente invention se rapporte à un dispositif pour limiter la croissance de plantes grimpantes sur une surface, qui comporte un ensemble d'éléments conducteurs raccordés électriquement à un générateur d'impulsions de tension et maintenus sur ladite surface par un support électriquement isolant.

Dans une variante préférée de l'invention, le générateur d'impulsions de tension est un électrificateur pour clôtures électriques.

Les éléments conducteurs sont de préférence des lattes métalliques.

Les supports électriquement isolant sont avantageusement des profilés comportant une rainure apte à recevoir une latte.

La présente invention se rapporte également à un ensemble d'éléments choisis parmides éléments rectilignes, des raccords angulaires et des raccords pour arêtes, comportant chacun une latte conductrice et un profilé en matériau isolant, les dites lattes étant aptes à être connectées électriquement entre elles, lesdits profilés étant aptes à être fixés sur une surface, pour constituer un dispositif pour limiter la croissance de plantes grimpantes sur une surface.

La présente invention se rapporte enfin à un procédé pour limiter la croissance de plantes grimpantes sur une façade d'un bâtiment comportant les étapes de
- disposer un ensemble d'éléments rectilignes comportant chacun une latte conductrice et un profilé isolant sur ladite façade,
- raccorder les dits éléments rectilignes entre eux, directement ou au moyen de raccords,
- appliquer des impulsions électriques de tension au dit ensemble.

Dans ce procédé, on utilise de préférence un électrificateur pour clôtures éléctriques pour produire lesdites impulsions électriques.

### Brève description des figures

La figure 1 est une vue de face d'un bâtiment muni d'un limiteur de croissance de plantes grimpantes suivant l'invention.

La figure 2 est un schéma électrique du dispositif 2 suivant l'invention.

La figure 3 est une vue en perspective d'un élément rectiligne d'un limiteur de croissance de plantes grimpantes suivant l'invention.

La figure 4 est une vue en élévation de l'élément rectiligne de la figure 3.

La figure 5 représente, également en élévation, un élément de raccord angulaire d'un limiteur de croissance de plantes grimpantes suivant l'invention.

La figure 6 représente, en élévation, un élément de raccord d'un limiteur de croissance plantes grimpantes suivant l'invention pour le franchissement d'une arête murale.

La figure 7 représente un mode de raccordement électrique de deux éléments ou raccords d'un dispositif de l'invention.

### Description détaillée d'une forme d'exécution préférée de l'invention

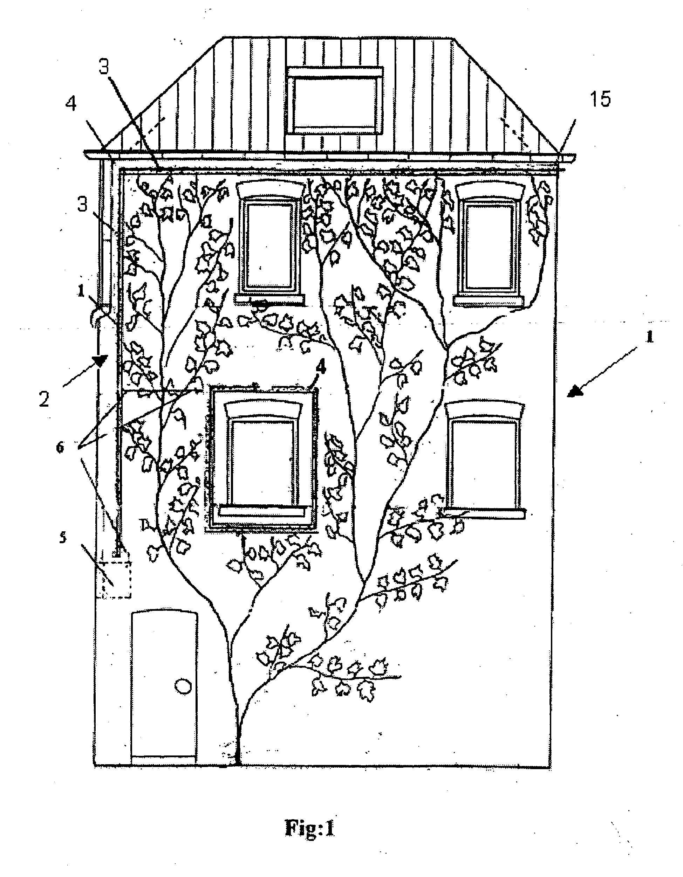

La figure 1 représente un exemple de bâtiment 1 muni d'un dispositif limiteur de croissance de plantes grimpantes 2 suivant l'invention. Ce dispositif 2 est constitué d'un ensemble d'éléments rectilignes 3 et de raccords angulaires 4, fixés sur une façade du bâtiment 1, et raccordés à un électrificateur 5. Une connexion électrique isolée 6 raccorde un ensemble d'éléments (1, 4) entourant une fenêtre aux autres éléments 1 du dispositif 2. L'élément 15 est un raccord angulaire permettant de franchir une arête du bâtiment 1.

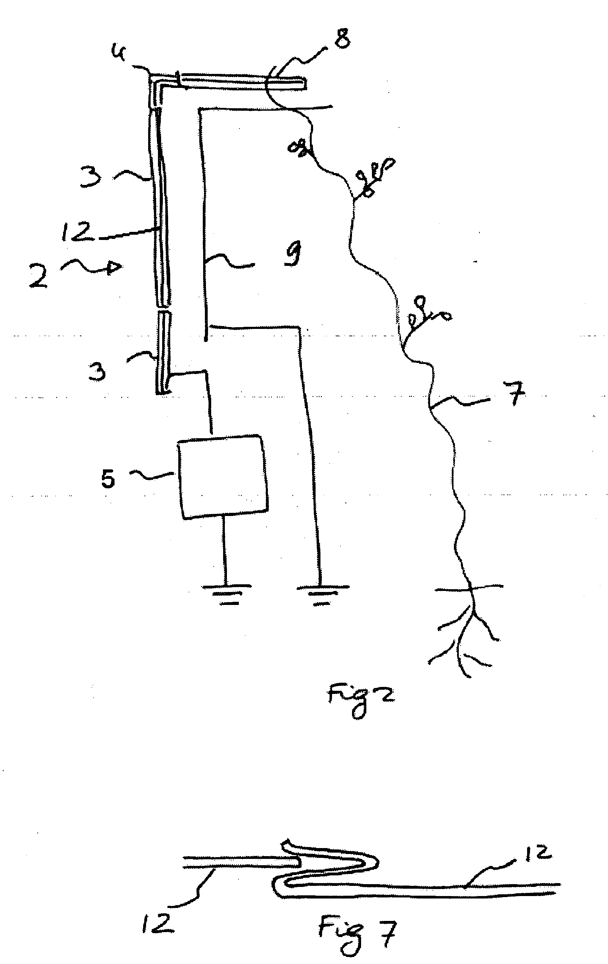

La figure 2 est un schéma électrique du dispositif 2 suivant l'invention. L'électrificateur 5 est un générateur d'impulsions de tension. Les appareils pour clôtures électriques, utilisés dans l'élevage, conviennent pour l'usage dans le cadre de l'invention. Un appareil produisant des impulsions de 10 000 V, ayant une énergie de 100mJ, et répétées toutes les 5 secondes est efficace pour limiter la croissance de Parthenocissus. L'électrificateur 5 est relié d'une part à la terre, et d'autre part aux conducteurs exposés 12 des éléments 1, 4 du dispositif 2. Il importe que l'ensemble des conducteurs exposés 12 des éléments 1 et des raccords 4, 15 soient en contact électrique avec l'électrificateur 5. Une plante grimpante 7 peut croître librement jusqu'à atteindre un élément 1 au point de contact 8. Les impulsions électriques délivrées par l'électrficateur 5 trouveront un chemin de retour à la terre à travers la tige et les racines de la plante 7 ou à travers la façade du bâtiment 1, provoquant ainsi le dessèchement et la destruction de la jeune pousse à l'extrémité de la tige. Contrairement à la méthode traditionnelle de limitation de croissance de plantes grimpantes, aucun déchet de coupe n'est généré. Afin d'améliorer la mise à la terre de la façade du bâtiment, des conducteurs non isolés 9 peuvent être fixés sur la façade et mis à la terre.

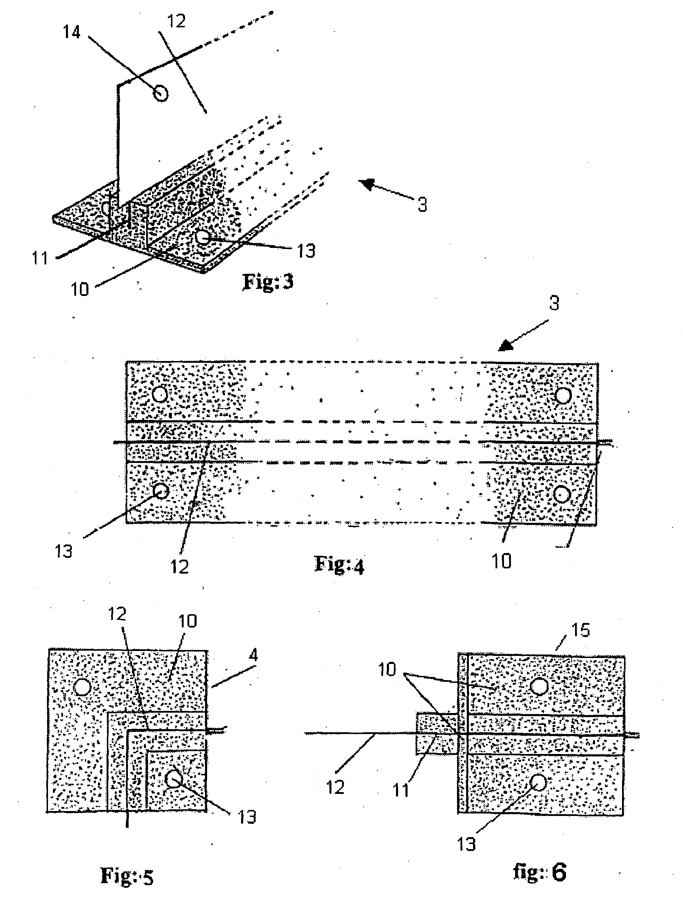

La figure 3 représente un élément rectiligne 3 d'un dispositif 2 suivant l'invention. Un profilé 10 en PVC, ou en un autre matériau isolant, présente une face plane destinée à être fixée sur une façade, et une rainure 11 pour recevoir une latte métallique 12. La latte métallique 12, de préférence en acier inoxydable, peut cependant être réalisée dans tout autre matériau conducteur et résistant à la corrosion, par exemple un matériau polymérique chargé d'un composant conducteur tel que la fibre de carbone. Dans une variante de l'invention, le profilé isolant 10 et la latte conductrice 12 sont obtenus par un seul moulage, une partie seulement dudit moulage étant chargé en fibres conductrices. Cette solution présente l'avantage de la simplicité de la fabrication et de l'assemblage et du montage. La latte 12 peut présenter des trous 14 permettant d'assurer la continuité électrique du dispositif 2, par boulonnage de fils électriques. La figure 4 est une vue en élévation du même élément rectiligne 3, dans laquelle des trous 13 pour fixation à une façade sont représentée. Ces élément peuvent être de longeur arbitraire, ce que représente les traits interrompus de la figure 3, pour être découpés à la longueur requise, ou fournis en un jeu de longueurs prédéterminées.

La figure 5 représente un raccord angulaire 4 pour un dispositif 2 de l'invention. Ce raccord angulaire 4 comporte une latte métallique 12 pliée en angle, sur un profilé 10 de forme adaptée, et permet d'assembler un dispositif 2 suivant un parcours désiré. Un autre type de raccord, le raccord pour franchissement d'arêtes 15, représenté à la figure 6, permet de raccorder des éléments rectilignes 3 disposés sur des façades différentes du bâtiment 1. Ce raccord 15 comporte une latte conductrice 12 en forme de « L». Un dispositif 2 adapté à toute forme de bâtiment peut être constitué à partir d'un jeu comportant des éléments rectilignes 3, de longueurs différentes, des raccords angulaires 4, d'angles divers, par exemple 90° et 135°, et des raccords de franchissement d'arêtes 15. Des éléments rectilignes 3 peuvent également être sciés à longueur en fonction des besoins du bâtiment 1. Une fois l'ensemble d'éléments 3 et de raccords 4, 15 bien arrimés à une façade, par exemple au moyen de vis à têtes isolantes, pour éviter les risques d'arcs et de pertes électriques, on raccorde le tout à un électrificateur de clôture 5 par un des trous 14 dans la latte 12 la plus proche. On peut bien entendu ne raccorder l'électrificateur 5 que pendant la péide de croissance des végétaux.

La figure 7 représente un mode de raccordement électrique de deux éléments 1 ou raccords 4,15 d'un dispositif 2 de l'invention dans lequel une extrémité d'une latte 12 est pliée en forme de «Z», formant ainsi une logette, dans laquelle une extrémité plate d'une autre latte 12 peut être enclipsée.

En combinant à partir d'un jeu d'éléments rectilignes 3, de longueurs différentes, de raccords angulaires 4, d'angles divers, par exemple 90° et 135°, et de raccords franchissement d'arêtes 15, on peut constituer un dispositif 2 adapté à toute forme de bâtiment. Les profilés 10 peuvent être réalisés dans une couleur se rapprochant de celle du matériau de la façade du bâtiment. Des lattes 12 d'une largeur de 5cm ont donné de bons résultats dans la limitation de la croissance des plantes grimpantes, sans être trop voyant, et sans offrir un perchoir à des oiseaux. Pour les supports irréguliers tels que les vieux murs en pierre, on veillera simplement à appliquer de la silicone sous le profilé isolant, ceci afin d'épouser les imperfections du support et d'empêcher ainsi la plante de se faufiler sous le profilé.

## Revendications

1. Dispositif (2) pour limiter la croissance de plantes grimpantes sur une surface, **caractérisé en ce qu'**il comporte un ensemble d'éléments conducteurs (12) raccordés électriquement à un générateur d'impulsions de tension (5) et maintenus sur ladite surface par un support (10) électriquement isolant.

2. Dispositif (2) suivant la revendication 1 **caractérisé en ce que** le générateur d'impulsions de tension (5) est un électrificateur (5) pour clôtures électriques.

3. Dispositif suivant l'une quelconque des revendications précédentes **caractérisé en ce que** les dits éléments conducteurs sont des lattes métalliques (12).

4. Dispositif suivant l'une quelconque des revendications précédentes **caractérisé en ce que** les dits supports électriquement isolant sont des profilés (10) comportant une rainure (11) apte à recevoir une latte (12).

5. Dispositif suivant l'une quelconque des revendications 1 et 2 **caractérisé en ce que** lesdits éléménts conducteurs (12) et supports électriquement isolant (10) sont obtenus par moulage d'un polymère dans lequel une partie (12) est chargée de fibres conductrices.

6. Ensemble d'éléments choisis parmi des éléments rectilignes (3), des raccords angulaires (4) et des raccords pour arêtes (15), comportant chacun une latte conductrice (12) et un profilé (10) en matériau isolant, les dites lattes (12) étant aptes à être connectées électriquement entre elles, lesdits profilés (10) étant aptes à être fixés sur une surface, pour constituer un dispositif suivant l'une quelconque des revendications précédentes.

7. Procédé pour limiter la croissance de plantes grimpantes (7) sur une façade d'un bâtiment (1) **caractérisé en ce qu'**il comporte les étapes de
- disposer un ensemble d'éléments rectilignes (3) comportant chacun une latte conductrice (12) et un profilé (10) isolant sur ladite façade,
- raccorder les dits éléments rectilignes entre eux, directement ou au moyen de raccords (4,15),
- appliquer des impulsions électriques de tension au dit ensemble.

8. Procédé suivant la revendication 7 **caractérisé en ce qu'**on utilise un électrificateur (5) pour clôtures électriques pour produire lesdites impulsions électriques.

## Claims

1. Device (2) for limiting the growth of climbing plants on a surface, **characterised in that** the device contains a set of conductive elements (12) electrically connected to a generator (5) of voltage pulses and maintained on said surface by an electrically insulating support (10).

2. Device (2) according to claim 1, **characterised in that** the generator (5) of voltage pulses is an energizer (5) for electric fences.

3. Device according one of the preceding claims, **characterised in that** said conductive elements are metal laths (12).

4. Device according any one of the preceding claims, **characterised in that** said electrically insulating supports are profiles (10) having a groove (11) suitable for receiving a lath (12).

5. Device according one of claims 1 or 2, **characterised in that** said conductive elements (12) and electrically insulating supports (10) are obtained by molding a polymer, wherein a portion (12) thereof is filled with conductive fibers.

6. Set of elements selected among straight elements (3), bends (4) and couplings for edges (15), each of these elements having a conductive lath (12) and a profile (10) composed of an insulating material, wherein said laths (12) are suitable for being electrically connected to one another, wherein said profiles (10) are suitable for being fastened on a surface, to form a device according to any one of the preceding claims.

7. Process for limiting the growth of climbing plants (7) on the façade of a building (1), **characterised in that** the process comprises the steps of :
- arranging a set of straight elements (3), each of them having a conductive lath (12) and an insulating profile (10) on said façade,
- connecting said straight elements to one another, directly or by means of couplings (4, 15),
- applying voltage electric pulses to said set.

8. Process according to claim 7, **characterised in that** an energizer (5) for electric fences is used to generate said electric pulses.

## Patentansprüche

1. Vorrichtung (2) zur Begrenzung von Kletterpflanzenwachstum auf einer Fläche, **dadurch gekennzeichnet, dass** die Vorrichtung eine Baugruppe von leitenden Elementen (12) aufweist, die an einen Generator (5) von Spannungsimpulsen elektrisch angeschlossen und auf der genannten Fläche von einem elektrisch isolierenden Träger (10) festgehalten sind.

2. Vorrichtung (2) nach Anspruch 1, **dadurch gekennzeichnet, dass** der Generator (5) von Spannungsimpulsen ein Elektrozaunlader (5) ist.

3. Vorrichtung nach einem der vorhergehenden Ansprüche, **dadurch gekennzeichnet, dass** die genannten leitenden Elemente metallische Latten (12) sind.

4. Vorrichtung nach einem der vorhergehenden Ansprüche, **dadurch gekennzeichnet, dass** die genannten elektrisch isolierenden Träger Profile (10) sind, mit einer Nut (11), die eine Latte aufnehmen kann.

5. Vorrichtung nach einem der Ansprüche 1 oder 2, **dadurch gekennzeichnet, dass** die genannten elektrisch leitenden Träger (12) und elektroisolierenden Träger (10) durch Gießen eines Polymers erhalten sind, worin ein Teil (12) davon mit leitenden Fasern gefüllt ist.

6. Baugruppe von Elementen, die unter geraden Elementen (3), Winkelstücken (4) und Verbindungen für Kanten (15) gewählt sind, wobei jedes Element eine leitende Latte (12) und ein aus einem isolierenden Material bestehendes Profil (10) umfasst, wobei die genannten Latten (12) miteinander elektrisch verbunden sein können, wobei die genannten Profile (10) auf einer Fläche befestigt sein können, um eine Vorrichtung nach einem der vorhergehenden Ansprüche zu bilden.

7. Verfahren zur Wachstum-Begrenzung von Kletterpflanzen (7) auf einer Fassade eines Gebäudes (1), **dadurch gekennzeichnet, dass** das Verfahren die Schritte aufweist, die darin bestehen :
- eine Baugruppe von geraden Elementen (3) anzuordnen, die je auf der genannten Fassade eine leitende Latte (12) und ein isolierendes Profil (10) umfassen,
- die genannten geraden Elemente unmittelbar oder mittels Verbindungsstücken (4, 15) miteinander zu verbinden,
- elektrische Spannungsimpulse an die genannte Baugruppe anzulegen.

8. Verfahren nach Anspruch 7, **dadurch gekennzeichnet, dass** ein Lader (5) für Elektrozäune benutzt wird, um die genannten elektrischen Impulse zu erzeugen.
